## Europäisches Patentamt
## European Patent Office
## Office européen des brevets

(19)

(11) Numéro de publication: **0 151 358**
**B1**

(12) FASCICULE DE BREVET EUROPÉEN

(45) Date de publication du fascicule du brevet:
**12.08.87**

(51) Int. Cl.⁴: **B 01 J 37/02, B 01 J 31/04**

(21) Numéro de dépôt: **84402478.6**

(22) Date de dépôt: **03.12.84**

(54) **Matériau comportant des micro-agrégats de composés inorganiques ou organométalliques et son procédé de fabrication.**

(30) Priorité: **12.12.83 FR 8319841**

(43) Date de publication de la demande:
**14.08.85 Bulletin 85/33**

(45) Mention de la délivrance du brevet:
**12.08.87 Bulletin 87/33**

(84) Etats contractants désignés:
**DE GB**

(56) Documents cité:
**DE-A-1 800 380**
**FR-A-1 595 890**
**FR-A-2 130 465**
**GB-A-1 200 595**

**CHEMICAL ABSTRACTS, volume 31, no. 21, 10 novembre 1937, colonne 7760, lignes 1-11, Columbus, Ohio, US; K.B. BLODGETT et al.: "Built-up films of barium stearate and their optical properties"**
**REVUE DE L'INSTITUT FRANCAIS DU PETROLE, volume 27, no. 1, janvier-février 1972, pages 105-154; N. KOHLER et al.: "La catalyse par des dérivés de métaux de transition déposés sur des supports polymériques organiques"**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Barraud, André, 4, rue des Closeaux, F-91440 Bures- sur- Yvette (FR)**
Inventeur: **Leloup, Jean, 4, rue des Clos, F-91190 Gif- sur- Yvette (FR)**
Inventeur: **Ruaudel, Annie, 14, Allée des Frondaisons, F-91370 Verrières- le- Buisson (FR)**

(74) Mandataire: **Mongrédien, André, c/o BREVATOME 25, rue de Ponthieu, F-75008 Paris (FR)**

## Description

La présente invention a pour objet un matériau comportant des microagrégats de composés inorganiques ou organométalliques, utilisable en particulier en catalyse hétérogène et son procédé de fabrication.

De façon plus précise, elle concerne la réalisation de matériaux comportant des microagrégats ayant des dimensions proches des dimensions moléculaires, qui sont distribués dans le matériau de façon à former une structure organisée dotée de ce fait de propriétés nouvelles, notamment d'une réactivité importante.

Depuis quelques années, on cherche à diminuer la taille des agrégats de composés minéraux ou organométalliques utilisés comme catalyseur en catalyse hétérogène car ceci permet d'accroître l'efficacité des réactions en raison de l'augmentation des interfaces disponibles. Pour obtenir des composés minéraux ou organomét alliques sous la forme de microagrégats, on a développé des procédés utilisant des matrices qui empêchent la diffusion, donc l'agregation des composés.

Parmi ceux-ci, on connaît un procédé utilisant une matrice de gaz inerte, qui consiste à mélanger une vapeur métallique avec un gaz inerte, puis à refroidir le mélange à très basse température pour obtenir une matrice solide du gaz inerte dans laquelle le métal est inclus sous la forme d'atomes ou sous la forme de microagrégats (voir J. Chem. Phys. 70(12), 15/6/79, p. 5683-5691).

Ce procédé permet ainsi d'obtenir des microagrégats ayant une taille d'au plus 10 nm mais ces microagrégats ne sont pas stables des que l'on supprime la matrice solide par élévation de la température.

On connaît également un procédé utilisant des radiations ionisantes pour ioniser un solvant contenant en solution un sel métallique de façon à faire réagir "in situ" les électrons solvatés obtenus par ionisation avec les molécules du sel métallique. Dans ce procédé, on évite l'agregation ultérieure des particules métalliques en dispersant dans la solution un polymère soluble qui gène la diffusion des espèces. On peut ainsi fabriquer des catalyseurs de platine, d'iridium, de rhodium, de ruthénium, de cuivre ayant un diamètre moyen de particules de l'ordre de 1 nm. (Voir Nouveau Journal de Chimie, vol.6, n°11, 1982, p. 507-509)

Cependant, ce procédé ne permet pas de contrôler avec précision la dimension des microagrégats formés.

La présente invention a précisément pour objet un matériau comportant des microagrégats de composés inorganiques ou organométalliqués, dans lequel ces microagrégats ont pratiquement les dimensions moléculaires et sont répartis de façon ordonnée dans une matrice solide et immobilisés par cette matrice.

Le matériau selon l'invention comprend une membrane constituée soit par au moins une couche monomoléculaire de molécules amphiphiles, soit par des molécules amphiphiles adsorbées sur un substrat, et des microagrégats de composés inorganiques ou organométalliqués rétenus sur ou dans ladite membrane.

Selon une caractéristique avantageuse de l'invention, la membrane est constituée par un émpilement de couches monomoléculaires de molécules amphiphiles, par exemple d'acides tels que les acides gras, de complexes ou de complexants comme les chlorures de platine complexés aux alkylaminés, aux alkylpyridines ou aux alkylpyridinium.

Avantagéusement, les microagrégats sont des microagrégats d'un métal, par éxemple d'un métal noble tel que l'argent, le palladium ou le platiné.

Les microagrégats peuvent aussi être constitués par un composé métallique, par exemple un halogénure, un oxyde ou un chalcogénure (sulfure, séléniure ou tellurure).

L'invention a également pour objet un procédé de fabrication d'un materiau comportant des microagrégats d'un compose inorganique ou organometallique. Ce procédé comprend les étapes suivantes:

1° préparer une membrane constituée soit par au moins une couche monomoléculaire de molécules amphiphiles, soit par des molécules amphiphiles adsorbées sur un substrat, contenant un ion ou un composé précurseur dudit composé inorganiqué ou organométallique; et

2° faire réagir l'ion ou le composé précurseur fixé sur la membrane avec au moins un réactif pour former "in situ" dans la membrane le composé inorganique ou organométallique.

Selon un premier mode de mise en oeuvre du procédé de l'invention, on réalise la première étape en préparant tout d'abord une membrane à partir de molécules amphiphiles comportant des groupements ayant une affinité chimique ou physique pour l'ion ou le composé précurseur dudit composé inorganique ou organometallique, et en mettant ensuite en contact la membrane ainsi obtenue avec une solution de l'ion ou du composé précurseur de façon à fixer l'ion ou le composé précurseur sur les sites de la membrane qui correspondent auxdits groupements.

Le procédé de l'invention consiste ainsi à utiliser l'organisation et la rigidité d'une matrice solide constituée soit par au moins une couche monomoléculaire de molécules amphiphiles, soit par des molécules amphiphiles adsorbées sur un substrat, pour fixer et immobiliser un ion ou un composé précurseur et limiter ensuite la croissance des grains ou des agrégats lors de la réaction chimique entre l'ion ou le composé précurseur et les réactifs nécessaires à la formation du compose inorganique ou du composé organométallique.

En effet, lorsque l'on utilise une membrane constituée par un empilement de couches monomoléculaires de molécules amphiphiles, on dispose d'une matrice solide organisée et l'on peut fixer l'ion ou le composé précurseur à des endroits définis de la structure en couches monomoléculaires des molécules organiques amphiphiles.

On rappelle que les molécules amphiphiles sont des molécules organiques comportant, d'une part, des groupements hydrophiles, soit des groupements ayant une affinité pour l'eau et, d'autre part, des groupements hydrophobes, soit des groupements n'ayant aucune affinité pour l'eau.

A titre d'exemple de tels composés, on peut citer les molécules d'acides gras dont les groupements carboxyliques constituent les groupements hydrophiles, alors que la chaîne hydrocarbonée située à l'autre extrémité de la molécule constitué le groupément hydrophobe.

L'emploi de tels composés se révèle particulièrement avantageux car ils peuvent être déposés en couches monomoléculaires présentant une structur; organisée, par la méthode de Langmuir-Blodgett. Selon cette méthode on disperse les molécules amphiphiles sur un liquide constitué par de l'eau; en raison de la présence des groupements hydrophiles et hydrophobes, les molécules s'orientent à la surface de l'eau de façon que leur groupement hydrophile plonge dans l'eau tandis que le reste de la molécule tend à s'en écarter. Lorsqu'on limité l'étalement de ces molécules sur la surfacé de l'eau à un film monomoléculaire, on peut ensuité déposer ce film sur un substrat et, lors du dépôt, les molécules du film conserveront leur oriéntation et on retrouvera ainsi dans un plan toutes les extrémités hydrophiles et dans le plan opposé du film toutés les extrémités hydrophobés. Ainsi, lorsqué l'on réalise une membrane comportant une pluralité de couches monomoléculaires déposées sur un substrat, on trouve alternativement des plans hydrophiles et des plans hydrophobes.

On peut ensuite fixer dans cette structuré des microagrégats de composés organiqués ou organometalliques aux endroits voulus, c'ést-à-diré dans le cas d'ions métalliques dans les plans hydrophiles de la matrice.

Lorsque les molécules constituant la membrane comportent des groupements présentant une affinité physique vis-à-vis de l'ion ou du composé précurseur, celui-ci est fixé par physisorption et on peut contrôler la quantité d'ions ou de composé précurseur introduite dans la membrane en réglant de façon appropriée la concentration en ion ou en composé précurseur de la solution et la durée et la température utilisées pour la mise en contact de la membrane avec la solution.

En revanche, lorsque les molécules constituant la membrane comportent des groupements ayant une affinité chimique pour l'ion ou le composé précurseur, ce dernier est alors stoechiométriquement fixé sur des sites spécifiques de la membrane et on obtient ainsi des agrégats qui peuvent présenter la taille moléculaire. En effet, si l'on utilise par exemple une membrane comportant des groupements acides et un composé précurseur constitué par un sel métallique, on obtient une fixation du cation métallique sur les groupements acides de la membrane et lors des réactions ultérieures, on peut obtenir des microagrégats ayant la taille d'une molécule.

Dans le cas où la membrane est constituée par un empilement de couches monomoléculaires de molécules amphiphiles, les cations métalliques sont ainsi fixés dans les plans hydrophiles de la matrice et lors des réactions ultérieures, on obtiendra des microagrégats de composés minéraux, par exemple de métaux ou de composés métalliques tels que des sulfures ou des halogénures, ayant la taille d'une molécule, soit des dimensions inférieures à 1 nm. Le fait de limiter à des dimensions si faibles la taille des microagrégats répartis dans la matrice permet l'obtention de propriétés améliorées, par exemple une activité catalytique très supérieure lorsqu'il s'agit de métaux ayant des propriétés catalytiques, ou des propriétés améliorées de fluorescence, de semiconductivité et/ou de luminescence dans le cas de microagrégats réalisés en composés minéraux présentant de telles propriétés.

Ainsi, le procédé de l'invention permet d'obtenir une matrice solide ayant une structure organisée comportant alternativement des plans hydrophiles et des plans hydrophobes, et des molécules de composés minéraux synthétisés "in situ" entre les différentes couches et organisés à deux dimensions dans l'espace, sans être attachés à la matrice en couches monomoléculaires. On peut ainsi obtenir des microagrégats ayant des dimensions moléculaires répartis dans le plan hydrophile et separes les une des autres par une matrice ayant par exemple une épaisseur de 5 nm. Les microagrégats ne sont pas distribués de façon aléatoire dans ces plans intercalaires mais ils ont également une structure organisée induite par la position des groupements hydrophiles des molécules constituant la couche monomoléculaire. Ceci permet de conférer au système des propriétés différentes, notamment en réactivité, par rapport à un système analogue dans lequel les microagrégats seraient distribués de façon aléatoire.

De plus, la matrice présente une structure cristalline, alors que dans le cas de la plupart des produits de l'art antérieur, on utilise notamment pour la fabrication de catalyseurs, des structures polymères amorphes poreuses, ce qui ne permet pas de protéger le métal à activité catalytique distribué dans la matrice. En revanche, dans l'invention, la matrice compacte organique protége le métal à activité catalytique des problémes d'empoisonnement car seuls les gaz peuvent diffuser dans cette structure compacte et ils rejettent à l'extérieur les impuretés ou poisons de dimensions supérieures à 0,4 nm.

Selon un second mode de mise en oeuvre du procédé de l'invention, on réalise la première étape en préparant la membrane à partir de molécules contenant ledit ion ou ledit composé précurseur.

Ce second mode de mise en oeuvre du procédé est utilisable en particulier lorsqu'on veut fixer dans la membrane un cation métallique. Dans ce cas, les molécules utilisées pour préparer la membrane peuvent être des molécules du sel métallique correspondant, par exemple un sel métallique d'acide gras. Dans ce dernier cas, on profite également de la structure et de l'organisation de la matrice solide constituée par le sel métallique pour obtenir les cations métalliques aux endroits voulus lors des réactions ultérieures.

Ainsi, le procédé de l'invention permet de contrôler avec précision la taille et les dimensions de ces microagrégats.

Par ailleurs, il présente l'avantage de permettre la fabrication de microagrégats de constitution très variée. En effet, on peut, par exemple, fixer un cation métallique sur la membrane, puis libérer ensuite le métal en faisant réagir le cation avec un agent réducteur. On peut aussi former différents sels métalliques dans la membrane en introduisant ensuite des réactifs constitués par des acides ou des sels comportant l'anion désiré par exemple des sulfures, des phosphures, des halogénures, des cyanures, des thiocyanates etc... On peut aussi réaliser successivement différentes réactions dans la membrane pour arriver au composé desire.

Selon un mode préféré de mise en oeuvre du procédé de l'invention, la membrane est constituée de couches monomoléculaires de molécules organiques amphiphiles.

On peut aussi utiliser selon l'invention des membranes amphiphiles formées de molécules biologiques naturelles ou artificielles telles que des membranes de phospholipides munies de protéines, qui présentent également une bonne organisation de structure.

La membrane peut encore être constituée par un substrat réalisé par exemple en alumine, sur lequel sont adsorbées des molécules amphiphiles ayant des propriétés différentes de celles du substrat. Dans le cas de telles couches adsorbées, l'alternance hydrophile-hydrophobe peut ne pas résider dans la nature amphiphile de la molécule elle-même, mais dans l'alternance entre le substrat et les molécules adsorbées. Ainsi, la surface du substrat peut jouer le rôle de plan hydrophile et la molécule adsorbée le rôle de région hydrophobe, ou au contraire la surface du substrat peut jouer le rôle de plan hydrophobe et la molécule jouer le rôle de région hydrophile.

A titre d'exemple, une membrane de ce type peut être constituée de molécules d'acide stéarique adsorbées sur un substrat en alumine.

Selon l'invention, les molécules qui constituent la membrane sont choisies en fonction du composé inorganique ou du composé organométallique à former. Ainsi, lorsqu'on veut former des microagrégats de métal ou de sel métallique, on peut utiliser des molécules comportant des fonctions acides, car celles-ci sont capables de fixer la plupart des cations métalliques.

Toutefois, si l'on veut former des microagrégats de métaux nobles qui ne réagissent pas avec les fonctions acides, on peut alors utiliser une membrane dans laquelle les molécules sont capables de complexer un sel soluble de ces métaux.

A titre d'exemple de molécules susceptibles d'être utilisées dans ce dernier cas, on peut citer les molécules organiques comportant des groupements nitrile ou amine qui sont capables de complexer le chlorure de platine de façon stoechiométrique. On peut aussi utiliser des molécules comportant des fonctions acétyléniques car celles-ci sont capables de réagir avec les ions tels que l'argent, le cuivre et le mercure.

Lorsque la membrane est constituée de couches monomoléculaires de molécules amphiphiles, on peut encore utiliser des molécules amphiphiles comportant des fonctions éthyléniques et soumettre ensuite l'ensemble des couches à une irradiation par des rayonnements ionisants pour lier les couches entre elles par polymérisation au niveau des fonctions éthyléniques. On peut aussi utiliser des couches monomoléculaires formées de molécules différentes et effectuer éventuellement ensuite des réactions de polycondensation entre les différentes molécules.

Le procédé de l'invention s'applique avantageusement à la fabrication de microagrégats à base de métal ou de sel métallique. Dans ce cas on peut utiliser une membrane formée de couches monomoléculaires de molécules d'acide gras, par exemple d'acide béhénique, d'acide stéarique, d'acide oméga-tricosénoïque ou d'acide arachidique, puis transformer cet acide en le sel métallique correspondant par réaction avec un composé précurseur approprié, constitué par exemple par un sel métallique tel qu'un sel d'argent ou un sel de cuivre.

On peut aussi utiliser directement le sel métallique correspondant pour la fabrication de la membrane.

Les réactions qui se dérouleront ensuite dans la membrane seront, soit une réaction de réduction si l'on veut former des microagrégasts de métal, soit une réaction d'échange avec un réactif approprié, par exemple un acide ou un autre sel métallique lorsqu'on veut former des microagrégats de composés métalliques.

Dans le premier cas, les réactifs utilisés sont des agents réducteurs tels que l'hydrazine, la thiocarboxyhydrazine ou le fer ferreux.

Dans le second cas, on utilisera des réactifs constitués par exemple par l'acide chlorhydrique, l'acide bromhydrique ou l'hydrogène sulfuré $H_2S$.

Le produit obtenu par le procédé de l'invention est constitué d'une membrane solide à l'intérieur de laquelle sont répartis des microagrégats d'un composé inorganique ou d'un composé organométallique. Ce produit peut être utilisé ainsi dans certaines applications par exemple, en catalyse, car la présence de la matrice organisée permet d'éviter la recristallisation des microagrégats et de protéger ceux-ci contre certaines espèces chimiques indésirables.

Lorsque le produit obtenu par le procédé de l'invention est transparent et comprend des microagrégats métalliques constitués par exemple par des grains d'argent, on peut utiliser ce produit pour l'étude de molécules par spectrométrie Raman renforcée en disposant les molécules à étudier sur le produit comportant les micrograins d'argent, ce qui permet d'obtenir un gain de sensibilité de $10^3$ à $10^5$ en raison des transferts de charge entre les molécules et les micrograins.

Pour d'autres applications, il est quelquefois préférable d'éliminer la matrice solide afin de libérer les microagrégats ou de les déposer sur le substrat servant de support à la membrane. Dans ce cas, le procédé de l'invention comprend une étape complémentaire consistant à dissoudre sélectivement la membrane de façon à libérer les microaorégats de composés inorganiques ou de composés organométalliques. On utilise dans ce but un solvant organique capable de dissoudre uniquement les molécules qui constituent la membrane.

D'autres caractéristiques et avantages de l'invention apparaîtront mieux à la lecture des exemples suivants donnés bien entendu à titre illustratif et non limitatif, en référence aux dessins annexés sur lesquels:

-la figure 1 représente le spectre infrarouge du sel d'argent obtenu par réaction de nitrate d'argent avec un empilement de couches monomoléculaires d'acide béhénique,

- la figure 2 représente le spectre dans le visible correspondant aux microagrégats obtenus dans l'exemple 1,

- la figure 3 est une micrographie représentant les microagrégats obtenus dans l'exemple 1,

- la figure 4 représente le spectre de diffraction électronique des microagrégats obtenus dans l'exemple 1,

- la figure 5 représente le spectre dans le visible des microagrégats obtenus dans l'exemple 2,

- la figure 6 représente les microagrégats obtenus dans l'exemple 2, et

- la figure 7 représente le spectre de diffraction électronique des microagrégats de la figure 6.

**Exemple 1**

On dépose par la méthode de Langmuir Blodgett 25 couches monomoléculaires d'acide béhénique sur un substrat transparent en $CaF_2$ de 3 cm sur 1 cm en utilisant une solution à $10^{-3}$ mol.$l^{-1}$ d'acide béhénique dans du chloroforme pour réaliser le dépôt. Par spectrophotométrie infrarouqe, on vérifie que l'acide béhénique déposé sur le substrat de fluorine est obtenu dans sa structure courante car l'on retrouve les caractéristiques de la forme b, qui sont le dédoublement de la bande $CH_2$ à 1470 cm$^{-1}$ et la présence des bandes de progression à 1300-1180 cm$^{-1}$.

On transforme ensuite l'acide béhénique en béhénate d'argent en plonoeant le substrat revêtu dans une solution aqueuse contenant $10^{-2}$ mol.$l^{-1}$ de nitrate d'argent à 20°C pendant un quart d'heure. On rince ensuite à l'eau distillée puis on sèche à l'air.

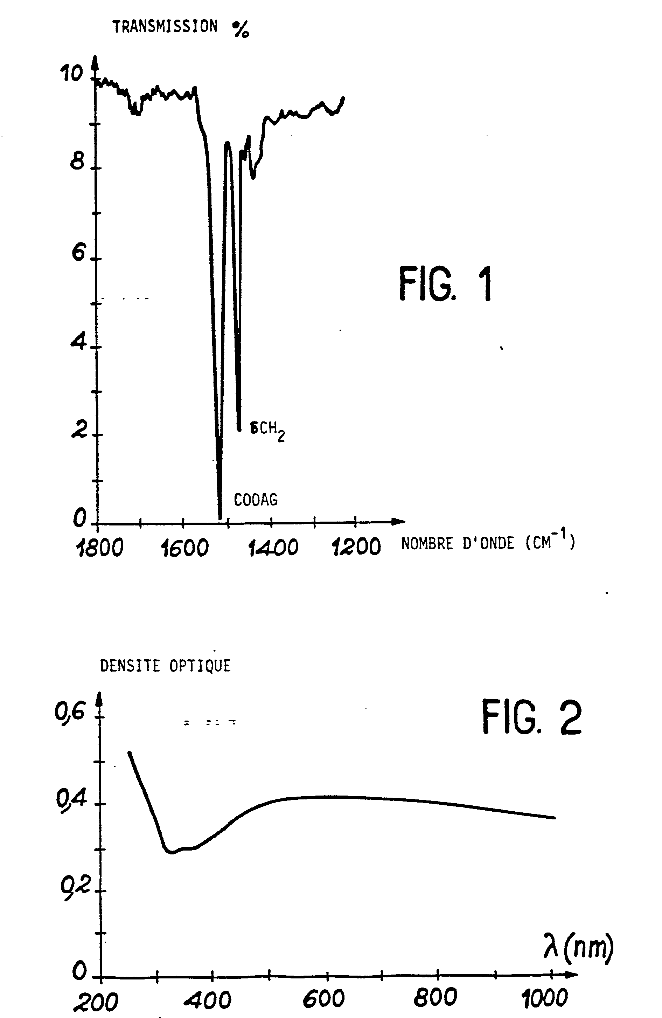

On vérifie la structure du produit obtenu par spectrométrie infrarouge, le spectre d'absorption infrarouge est représenté sur la figure 1 et il est caractéristique du sel d'argent. En effet, la bande $v_{C=O}$ à 1708 cm$^{-1}$ de l'acide a totalement disparu au profit de la bande $v_{COO^-}$ du sel à 1517 cm$^{-1}$. La bande $\delta CH_2$ à 1470 cm$^{-1}$ n'est plus dédoublée. Ainsi, le système cristallin a changé mais l'organisation en strates est conservée.

On réduit ensuite de façon très ménagée le béhénate d'argent par des vapeurs d'hydrazine pour former des microagrégats de l'ordre du nm dans la structure en couches monomoléculaires d'acide béhénique. Dans ce but, on utilise des vapeurs d'hydrazine à 20°C diluées dans un courant d'azote et on met en contact le substrat revêtu de béhénate d'argent avec ces vapeurs diluées pendant quelques minutes. Le substrat devient violacé. Par hydrolyse lente à l'air, l'acide béhénique est réqénéré. On vérifie ceci par spectrométrie infrarouge, ce qui indique que l'on obtient de l'acide béhénique dans un système cristallin différent de celui de l'acide de départ. En effet, la bande $\delta CH_2$ à 1470 cm$^{-1}$ n'est pas dédoublée et il n'y a pas de bandes de progression. On est donc en présence de la forme a peu fréquente mais très voisine de la structure du sel d'argent. Ainsi, il n'y a pas eu à ce stade de mouvement dans la matrice; l'énergie de la réaction n'est pas suffisante pour modifier la structure et permet la stabilisation d'une forme instable de l'acide béhénique. On caractérise alors les microagrégats ainsi obtenus par microscopie électronique, diffraction électronique et spectroscopie UV dans le visible.

Le spectre dans le visible représenté sur la figure 2 indique l'existence d'une bande d'absorption avec un maximum de densité-optique vers 600 nm. Ceci conduit à penser que l'on est encore en présence de grains conducteurs, mais la grande largeur de la bande d'adsorption indique une conductibilité des grains plus faible que pour l'argent métallique. Ceci peut correspondre soit à des composés d'argent non stoéchiométriques plus ou moins conducteurs, soit à une réduction de la conductibilité métallique par un effet de paroi dû à la faible taille des grains.

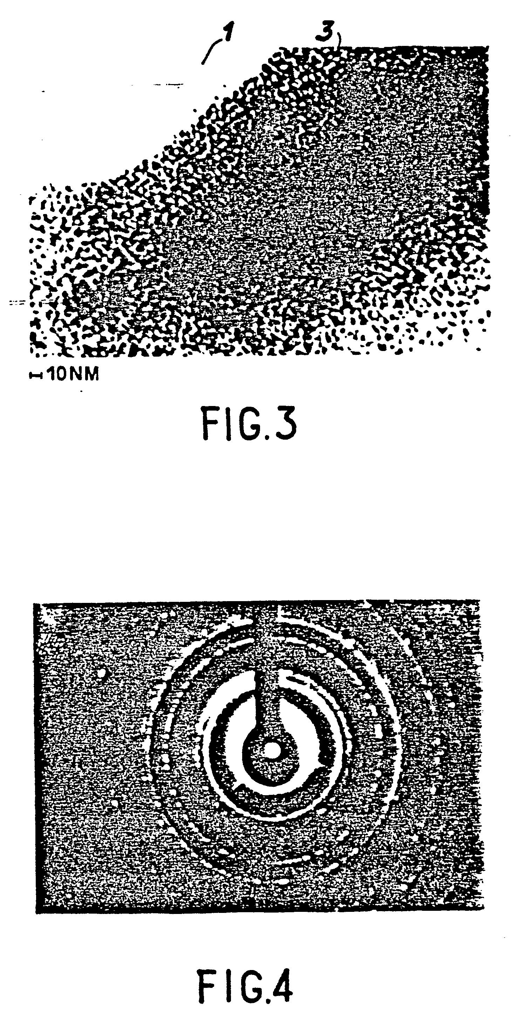

La figure 3 est une micrographie obtenue par microscopie électronique. Sur cette figure, on voit que le substrat 1 contient des grains 3 très petits régulièrement répartis et de taille inférieure à 2 nm, c'est-à-dire à la limite de résolution de l'appareil. Le spectre de diffraction électronique représenté sur la figure 4 ne correspond à aucun spectre connu des composés d'argent (argent-métal, oxyde, nitrate, etc...).

## Exemple 2

On prépare de la même façon que dans l'exemple 1 un substrat revêtu de 25 couches monomoléculaires d'acide béhénique, puis on transforme cet acide béhénique en béhénate d'argent dans les mêmes conditions que celles de l'exemple 1. On effectue ensuite une réduction du sel en utilisant des vapeurs concentrées d'hydrazine. Ceci est effectué en laissant quelques minutes le substrat revêtu au-dessus d'une solution d'hydrate d'hydrazine à 98 %. On obtient ainsi une réduction du béhénate d'argent et la transformation du produit en couches monomoléculaires d'acide béhénique stabilisé sous la forme a comme dans l'exemple 1, contenant des microagrégats d'argent.

On vérifie les propriétés du produit obtenu par spectrométrie dans le visible, microscopie électronique et diffraction électronique comme dans l'exemple 1.

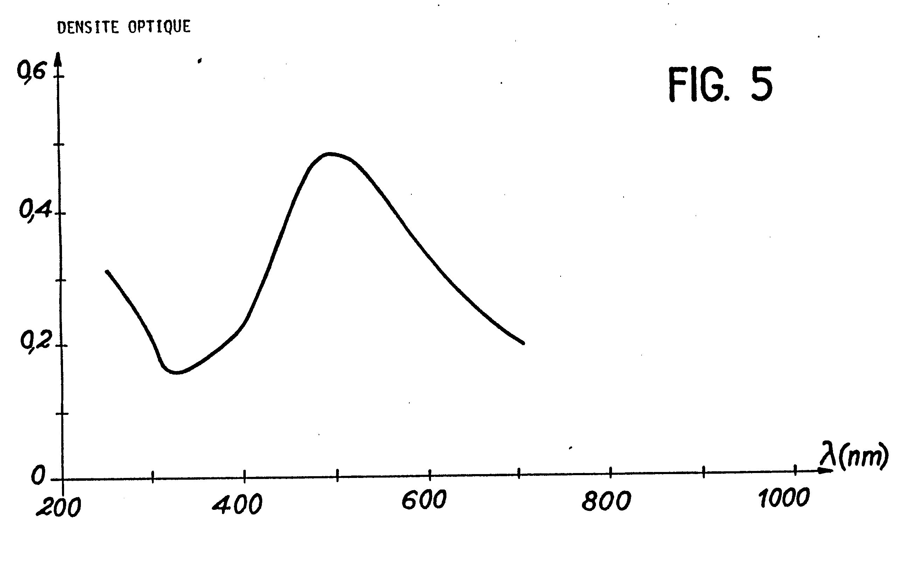

La figure 5 représente le spectre optique et on observe un maximum de densité optique située entre 400 et 500 nm avec une largeur d'environ 200 nm, ce qui correspond au spectre de l'argent.

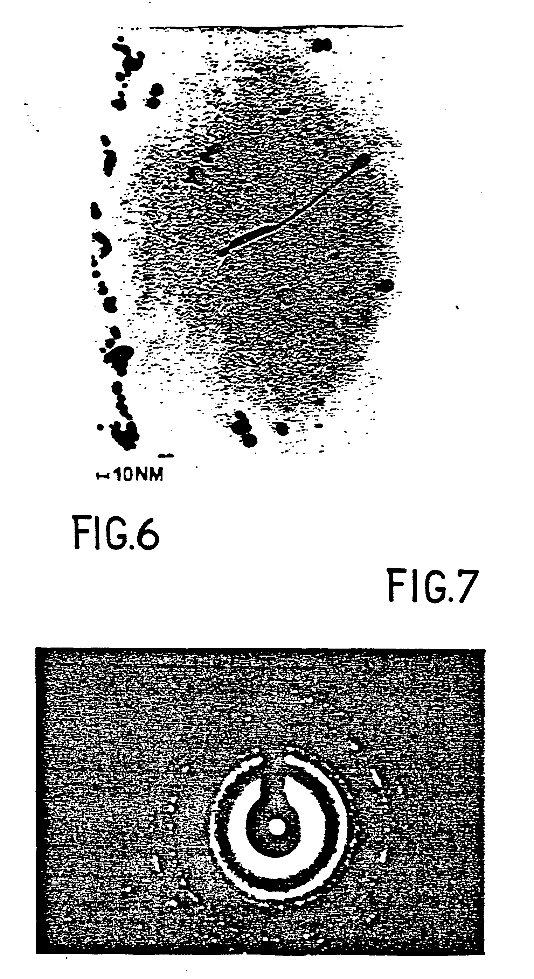

La figure 6 représente en microscopie électronique les microagrégats obtenus et l'on constate qu'ils ont des dimensions supérieures à celles des microagrégats de l'exemple 1, puisque l'on observe des agrégats irrégulièrement répartis de taille moyenne comprise entre 30 et 50 nm.

Le spectre de diffraction électronique représenté sur la figure 7 est celui de l'argent métallique.

Ainsi, lorsque l'on utilise un excès d'hydrazine, l'argent métallique formé "in situ" est capable de migrer dans la structure et de s'accumuler par exemple sur des défauts donnant ainsi naissance à des agrégats plus importants n'ayant plus les dimensions moléculaires.

En revanche, sans excès d'hydrazine, la structure solide des couches monomoléculaires maintient les atomes d'argent sur place et permet l'obtention de petits grains régulièrement répartis ayant des dimensions correspondant sensiblement à celles de la molécule d'argent.

## Exemple 3

On prépare par la méthode de Langmuir Blodgett onze couches monomoléculaires de béhénate d'argent déposées sur un substrat en collodion et on soumet l'ensemble à des vapeurs d'acide bromhydrique à 20°C. On obtient ainsi des microprécipités de bromure d'argent que l'on caractérise par leur spectre de diffraction électronique.

## Exemple 4

On prépare comme dans l'exemple 1, onze couches monomoléculaires d'acide béhénique déposées sur un substrat en quartz et on les transforme en béhénate d'argent par mise en contact avec une solution aqueuse à $10^{-2}$ mol.l$^{-1}$ de nitrate d'argent, à 20°C. On soumet ensuite l'ensemble à des vapeurs d'acide chlorhydrique et l'on obtient ainsi un précipité de micrograins de chlorure d'argent. Si l'on fait diffuser ensuite une solution d'hydroxylamine à pH = 8, on réduit le chlorure d'argent en argent métal et on caractérise les microagrégats d'argent ainsi obtenus par leur spectre dans le visible.

## Exemple 5

On prépare comme dans l'exemple 1, 31 couches d'acide oméga-tricosénoique sur un substrat en fluorine, puis on polymérise les couches par irradiation au moyen de rayonnements ionisants sous une dose de 100 mJ/cm$^2$. On soumet ensuite l'ensemble à l'action d'une solution aqueuse $10^{-2}$ mol.l$^{-1}$ de chlorure de cuivre, à 20°C. On obtient ainsi le sel de cuivre de l'acide polyoméga-tricosénoique et l'on réduit ensuite ce sel de cuivre en métal par action d'une solution aqueuse de fer ferreux.

## Exemple 6

On prépare comme dans l'exemple 1, 31 couches d'acide béhénique déposées sur un substrat en fluorine, puis on les met en contact pendant 20 min avec une solution aqueuse à $10^{-2}$ mol.l$^{-1}$ de chlorure de palladium (II). Dans ces conditions, il ne se forme pas de sel de palladium, ce que l'on vérifie par spectrophotonétrie infrarouge, mais le chlorure de palladium est retenu entre les couches monomoléculaires par physisorption. En faisant agir un courant d'oxyde de carbone, on précipite sur place des microagrégats de palladium noir.

## Exemple 7

On prépare par la méthode de Langmuir Blodgett 31 couches d'acide 2,4-diylidyne -pentacosanoïque sur un substrat de fluorine. On fait diffuser ensuite dans les couches, une solution aqueuse à $10^{-1}$ mol.l$^{-1}$ de chlorure cuivrique, ce qui conduit à la formation d'un sel de cuivre instable. Par action de vapeurs de pyridine, on obtient un précipité d'oxyde cuivrique.

**Exemple 8**

On prépare par la méthode de Langmuir - Blodgett 99 couches monomoléculaires de stéarate de cadmium déposées sur un substrat en verre On soumet ensuite le substrat comportant les 99 couches monomoléculaires à l'action d'hydrogène sulfuré et l'on obtient ainsi des microagrégats de sulfure de cadmium jaune.

**Exemple 9**

On prépare par la méthode de Langmuir Blodgett, 99 couches monomoléculaires d'arachidate de zinc déposées sur un substrat en verre. Comme précédemment, on fait agir sur le substrat ainsi revêtu de l'hydrogène sulfuré et l'on obtient ainsi des microprécipités de sulfure de zinc jaune.

**Exemple 10**

On prépare par la méthode de Langmuir Blodgett 131 couches monomoléculaires de tétrapyridyle-porphyrine de zinc comportant 4 chaîes en $C_{20}$ complexées par la pyridine (vérification spectroscopique). On soumet l'échantillon aux vapeurs d'acide chlorhydrique. Cette opération libère le cathion $Zn^{++}$ (vérification spectroscopique) qui reste confiné dans les couches.

**Exemple 11**

On utilise une membrane formée par une couche de polylysine sur laquelle est déposée une couche d'acide béhénique. On met ensuite en contact la membrane ainsi obtenue avec une solution ammoniacale contenant $10^{-1}$ mol.l$^{-1}$ de nitrate d'argent, puis on réduit le sel d'argent en métal en mettant la membrane en contact avec de la thiocarboxyhydrazine. On obtient ainsi des microagrégats d'argent métal.

**Exemple 12**

On prépare une membrane en adsorbant sur un substrat d'alumine de l'acide stéarique par mise en contact du substrat d'alumine avec une solution à $10^{-2}$ mol.l$^{-1}$ d'acide stéarique dans du chloroforme. On met ensuite en contact la membrane ainsi obtenue avec une solution

aqueuse contenant $10^{-2}$ mol.l$^{-1}$ de chlorure de nickel de façon à fixer le nickel sur les molécules d'acide stéarique, puis on précipite "in situ" du sulfure de nickel noir en diffusant dans la membrane de l'hydrogène sulfuré gazeux.

**Revendications**

1. Matériau comportant des microagrégats d'un composé inorganique ou organométallique, caractérisé en ce qu'il comprend une membrane constituée soit par au moins une couche monomoléculaire de molécules amphiphiles, soit par des molécules amphiphiles adsorbées sur un substrat, et des microagrégats d'un composé inorganique ou organométallique retenus sur ou dans ladite membrane.

2. Matériau selon la revendication 1, caractérisé en ce que la membrane est constituée par un empilement de couches monomoléculaires de molécules amphiphiles.

3. Matériau selon l'une quelconque des revendications 1 et 2, caractérisé en ce que les molécules amphiphiles sont des acides, des complexes ou des complexants amphiphiles.

4. Matériau selon la revendication 3, caractérisé en ce que les acides sont des acides gras.

5. Matériau selon l'une quelconque des revendications 1 à 4, caractérisé en ce que les microagrégats sont des microagrégats d'un métal.

6. Matériau selon la revendication 5, caractérisé en ce que le métal est choisi dans le groupe des métaux nobles.

7. Matériau selon l'une quelconque des revendications 1 à 4, caractérisé en ce que les microagrégats sont des microagrégats d'un composé métallique.

8. Matériau selon la revendication 7, caractérisé en ce que le composé métallique est choisi parmi les halogénures, les chalcogénures et les oxydes.

9. Procédé de fabrication d'un matériau comportant des microagrégats d'un composé inorganique ou organométallique, caractérisé en ce qu'il comprend les étapes suivantes:

1° préparer une membrane constitué soit par au moins une couche monomoléculaire de molécules amphiphiles soit par des molécules amphiphiles adsorbées sur un substrat, et contenant un ion ou un composé précurseur dudit composé inorganique ou organométallique; et

2° faire réagir l'ion ou le composé précurseur fixé dans la membrane avec au moins un réactif pour former "in situ" dans la membrane le composé inorganique ou organométallique.

10. Procédé selon la revendication 9, caractérisé en ce que l'on réalise la première étape en préparant tout d'abord une membrane à partir de molécules amphiphiles comportant des groupements ayant une affinité physique ou chimique pour l'ion ou le composé précurseur dudit composé inorganique ou organométallique et en mettant ensuite en contact la membrane ainsi obtenue avec une solution de l'ion ou du composé précurseur de façon à fixer l'ion ou le composé précurseur sur les sites de la membrane qui correspondent auxdits groupements.

11. Procédé selon la revendication 9, caractérisé en ce que l'on réalise la première étape en préparant la membrane à partir de molécules amphiphiles contenant ledit ion ou ledit composé précurseur.

12. Procédé selon l'une quelconque des revendications 9 à 11, caractérisé en ce que la membrane est constituée de couches monomoléculaires de molécules amphiphiles.

13. Procédé selon l'une quelconque des revendications 9 à 11, caractérisé en ce que la membrane est constituée de molécules amphiphiles adsorbées sur un substrat.

14. Procédé selon l'une quelconque des revendications 12 et 13, caractérisé en ce que les molécules constituant la membrane sont choisies dans le groupe des molécules biologiques.

15. Procédé selon la revendication 12, caractérisé en ce que les molécules amphiphiles sont des molécules d'acide gras.

16. Procédé selon l'une quelconque des revendications 9 à 11, caractérisé en ce que le réactif est un agent réducteur.

17. Procédé selon l'une quelconque des revendications 9 à 11, caractérisé en ce que le réactif est H$_2$S.

18. Procédé de préparation de microagrégats d'un compose inorganique ou organo métallique, caractérisé en ce qu'il consiste à préparer une membrane comportant des microagrégats du composé inorganique ou organométallique par mise en oeuvre du procédé selon l'une quelconque des revendications 9 à 17, puis à dissoudre sélectivement la membrane de façon à libérer les microagrégats de composés inorganiques ou de composés organométalliques formés dans la membrane.

**Patentansprüche**

1. Zusammensetzung, die Mikroaggregate einer anorganischen bzw. metallorganischen Verbindung enthält, dadurch gekennzeichnet, daß sie aus einer Membran, die durch mindestens eine monomolekulare Schicht amphiphiler Moleküle oder durch auf ein Substrat adsorbierte amphiphile Moleküle gebildet wird, sowie aus Mikroaggregaten einer anorganischen bzw. metallorganischen Verbindung auf oder in der genannten Membran besteht.

2. Zusammensetzung nach Anspruch 1, dadurch gekennzeichnet, daß die Membran durch Aufeinanderschichten von monomolekularen Schichten amphiphiler Moleküle gebildet wird.

3. Zusammensetzung nach einem der Ansprüche 1 und 2, dadurch gekennzeichnet, daß als amphiphile Moleküle Säuren, Komplexe oder amphiphile Komplexbildner dienen.

4. Zusammensetzung nach Anspruch 3, dadurch gekennzeichnet, daß als Säuren Fettsäuren verwendet werden.

5. Zusammensetzung nach einem der Ansprüche 1 bis 4, dadurch gekennzeichnet, daß als Mikroaggregate Mikroaggregate eines Metalls verwendet werden.

6. Zusammensetzung nach Anspruch 5, dadurch gekeinzeichnet, daß das Metall aus der Gruppe der Edelmetalle gewählt wird.

7. Zusammensetzung nach einem der Ansprüche 1 bis 4, dadurch gekennzeichnet, daß als Mikroaggregate Mikroaggregate einer metallischen Verbindung dienen.

8. Zusammensetzung nach Anspruch 7, dadurch gekennzeichnet, daß die metallische Verbindung aus den Halogeniden, Chalcogeniden und Oxiden gewählt wird.

9. Verfahren zur Herstellung einer Zusammensetzung, die Mikroaggregate einer anorganischen bzw. metallorganischen Verbindung ent hält, dadurch gekennzeichnet, daß es aus den folgenden Schritten besteht:
1. Präparieren einer Membran, die aus mindestens einer monomolekularen Schicht amphiphiler Moleküle oder aus auf ein Substrat adsorbierten amphiphilen Molekülen besteht und ein Ion oder eine Verbindung als Vorstufe der genannten anorganischen bzw. metallorganischen Verbindung enthält; und
2. das in der Membran angelagerte Ion bzw. die als Vorstufe dienende Verbindung wird mit mindestens einem Reagens zur Reaktion gebracht, um "in situ" in der Membran die anorganische bzw. metallorganische Verbindung herzustellen.

10. Verfahren nach Anspruch 9, dadurch gekennzeichnet, daß der erste Schritt vollzogen wird, indem zunächst eine Membran auf Basis von amphiphilen Molekülen präpariert wird, die Gruppierungen mit einer physikalischen oder chemischen Affinität bezüglich des Ions bzw. der als Vorstufe der genannten anorganischen oder metallorganischen Verbindung dienenden Verbindung aufweisen, und dann die solcherart entstandene Membran mit einer Lösung des Ions bzw. der als Vorstufe dienenden Verbindung dergestalt in Berührung gebracht wird, daß das Ion bzw. die als Vorstufe dienende Verbindung auf den den genannten Gruppierungen entsprechenden Plätzen der Membran gebunden wird.

11. Verfahren nach Anspruch 9, dadurch gekennzeichnet, daß der erste Schritt durch Präparieren der Membran auf Basis amphiphiler Moleküle vollzogen wird, die das genannte Ion bzw. die genannte als Vorstufe dienende Verbindung enthalten.

12. Verfahren nach einem der Ansprüche 9 bis 11, dadurch gekennzeichnet, daß die Membran aus monomolekularen Schichten amphiphiler Moleküle besteht.

13. Verfahren nach einem der Ansprüche 9 bis 11, dadurch gekennzeichnet, daß die Membran aus auf ein Substrat adsorbierten amphiphilen Molekülen besteht.

14. Verfahren nach einem der Ansprüche 12 und 13, <u>dadurch gekennzeichnet, daß die</u> Moleküle, die die Membran bilden, aus der Gruppe der biologischen Moleküle gewählt werden.

15. Verfahren nach Anspruch 12, <u>dadurch gekennzeichnet, daß</u> als amphiphile Moleküle Fettsäure-Moleküle dienen.

16. Verfahren nach einem der Ansprüche 9 bis 11, <u>dadurch gekennzeichnet, daß</u> als Reagens ein Reduktionsmittel dient.

17. Verfahren nach einem der Ansprüche 9 bis 11, <u>dadurch gekennzeichnet, daß</u> als Reagens H₂O verwendet wird.

18. Verfahren zur Präparierung von Mikroaggregaten einer anorganischen bzw. metallorganischen Verbindung, <u>dadurch gekennzeichnet, daß</u> es darin besteht, eine Membran zu präparieren, die Mikroaggregate einer anorganischen bzw. metallorganischen Verbindung enthält, indem das Verfahren nach einem der Ansprüche 9 bis 17 durchgeführt wird, und daraufhin die Membran selektiv aufzulösen dergestalt, daß die Mikroaggregate anorganischer bzw. metallorganischer Verbindungen, die in der Membran gebildet wurden, frei werden.

**Claims**

1. Material containing microaggregates of an inorganic or organometallic compound, characterized in that it comprises a membrane consisting either of at least one monomolecular layer of amphiphilic molecules, or of amphiphilic molecules adsorbed on a substrate, and microaggregates of an inorganic or organometallic compound which are held on or in the said membrane.

2. Material according to Claim 1, characterized in that the membrane consists of a stack of monomolecular layers of amphiphilic molecules.

3. Material according to either of Claims 1 and 2, characterized in that the amphiphilic molecules are amphiphilic acids, complexes or complexants.

4. Material according to Claim 3, characterized in that the acids are fatty acids.

5. Material according to any one of Claims 1 to 4, characterized in that the microaggregates are microaggregates of a metal.

6. Material according to Claim 5, characterized in that the metal is chosen from the group of noble metals.

7. Material according to any one of Claims 1 to 4, characterized in that the microaggregates are microaggregates of a metal compound.

8. Material according to Claim 7, characterized in that the metal compound is chosen from halides, the salts derived from oxygen, sulphur, selenium and/or tellurium, and oxides.

9. Process for the manufacture of a material containing microaggregates of an inorganic or organometallic compound, characterized in that it comprises the following stages:

1 - preparing a membrane consisting either of at least one monomolecular layer of amphiphilic molecules or of amphiphilic molecules adsorbed on a substrate and containing an ion or a compound which is a precursor of the said inorganic or organometallic compound; and

2 - reacting the precursor compound or ion fixed in the membrane with at least one reactant in order to form the inorganic or organometallic compound in situ in the membrane.

10. Process according to Claim 9, characterized in that the first stage is performed by first preparing a membrane from amphiphilic molecules containing groups having a physical or chemical affinity for the ion or the compound which is a precursor of the said inorganic or organometallic compound and by then placing the membrane produced in this manner in contact with a solution of the precursor compound or ion so as to fix the precursor compound or ion at the sites of the membrane which correspond to the said groups.

11. Process according to Claim 9, characterized in that the first stage is performed by preparing the membrane from amphiphilic molecules containing the said ion or the said precursor compound.

12. Process according to any one of Claims 9 to 11, characterized in that the membrane consists of monomolecular layers of amphiphilic molecules.

13. Process according to any one of Claims 9 to 11, characterized in that the membrane consists of amphiphilic molecules adsorbed on a substrate.

14. Process according to either of Claims 12 and 13, characterized in that the molecules forming the membrane are chosen from the group of biological molecules.

15. Process according to Claim 12, characterized in that the amphiphilic molecules are fatty acid molecules.

16. Process according to any one of Claims 9 to 11, characterized in that the reactant is a reducing agent.

17. Process according to any one of Claims 9 to 11, characterized in that the reactant is H₂S.

18. Process for preparing microaggregates of an inorganic or organometallic compound, characterized in that it consists in preparing a membrane containing microaggregates of the inorganic or organometallic compound by employing the process according to any one of Claims 9 to 17, and then dissolving the membrane selectively so as to release the microaggregates of inorganic compounds or of organometallic compounds formed in the membrane.

TRANSMISSION %

FIG. 1

$\delta CH_2$

COOAG

NOMBRE D'ONDE $(CM^{-1})$

DENSITE OPTIQUE

FIG. 2

$\lambda (nm)$

FIG.3

FIG.4

3

FIG. 5

⊢10NM

## FIG.6

## FIG.7